Europäisches Patentamt

European Patent Office

Office européen des brevets

(19)

(11) Veröffentlichungsnummer: **0 229 933 B1**

# EUROPÄISCHE PATENTSCHRIFT

(12)

(45) Veröffentlichungstag der Patentschrift: **24.04.91**

(51) Int. Cl.5: **G01P 5/01**, G01F 1/32

(21) Anmeldenummer: **86116478.8**

(22) Anmeldetag: **27.11.86**

(54) Wirbelströmungsmesser.

(30) Priorität: **13.12.85 DE 3544198**

(43) Veröffentlichungstag der Anmeldung:
**29.07.87 Patentblatt 87/31**

(45) Bekanntmachung des Hinweises auf die
Patenterteilung:
**24.04.91 Patentblatt 91/17**

(84) Benannte Vertragsstaaten:
**CH DE FR GB IT LI NL**

(56) Entgegenhaltungen:
**EP-A- 0 110 321**
**EP-A- 0 226 082**
**GB-A- 2 087 084**
**US-A- 4 362 061**

(73) Patentinhaber: **FLOWTEC AG**
**Kägenstrasse 4**
**CH-4153 Reinach BL 1(CH)**

(72) Erfinder: **Herzog, Michael**
**Sommergasse 8**
**CH-4108 Witterswil(CH)**

(74) Vertreter: **Leiser, Gottfried, Dipl.-Ing. et al**
**Patentanwälte Prinz, Leiser, Bunke & Partner**
**Manzingerweg 7**
**W-8000 München 60(DE)**

## Beschreibung

Die Erfindung bezieht sich auf einen Wirbelströmungsmesser zur Messung der Störmungsgeschwindigkeit eines Strömungsmediums in einer Rohrleitung, mit einem im Strömungskanal der Rohrleitung angeordneten Staukörper, der zur Erzeugung Kármán'scher Wirbel ausgebildet ist, einem Wirbelsensor, der auf die von den Kármán'schen Wirbeln erzeugten Druckschwankungen anspricht, wobei der Wirbelsensor einen ersten Schwingkörper aufweist, der durch die Wirbel-Druckschwankungen auslenkbar ist, sowie einen kapazitiven Wandler mit einem Elektrodenhalter, der in einem gegenüber dem Strömungsmedium abgeschlossenen Hohlraum des ersten Schwingkörpers angeordnet ist und wenigstens eine Kondensatorelektrode trägt, die einem Elektrodenabschnitt des ersten Schwingkörpers derart gegenüberliegt, daß sie mit diesem eine Meßkapazität bildet, die bei einer durch die Wirbel-Druckschwankungen verursachten Auslenkung des ersten Schwingkörpers veränderbar ist, wobei der Elektrodenhalter als zweiter Schwingkörper ausgebildet ist, der von den Wirbel-Druckschwankungen entkoppelt ist, und mit einer Auswerteschaltung, die eine mit der bzw. jeder Kondensatorelektrode verbundene Kapazitätsmeßschaltung enthält, die in Abhängigkeit von den Änderungen der bzw. jeder Meßkapazität ein für die Frequenz der Wirbel-Druckschwankungen und damit für die Strömungsgeschwindigkeit in der Rohrleitung kennzeichnendes elektrisches Signal erzeugt.

Bei einem aus der US-A-4 362 061 bekannten Wirbelströmungsmesser dieser Art bildet der Staukörper selbst den ersten Schwingkörper des Wirbelsensors. Der Staukörper enthält daher einen gegenüber dem Strömungsmedium dicht abgeschlossenen Hohlraum, in dem der Elektrodenhalter des kapazitiven Wandlers angeordnet ist. Der Staukörper ist durch einen Ansatz auf mehr als das Doppelte des Durchmessers des Strömungskanals verlängert und an beiden Enden so gelagert, daß er durch die Wirbel-Druckschwankungen in Biegeschwingungen versetzt wird. Durch die Schwingbewegung des Staukörpers relativ zu dem in seinem Hohlraum feststehenden Elektrodenhalter ergeben sich Kapazitätsänderungen zwischen den vom Elektrodenhalter getragenen Elektroden und den diesen Elektroden gegenüberliegenden Wandabschnitten des Staukörper-Hohlraums. Der Elektrodenhalter ist stabförmig und am einen Ende eingespannt, so daß er einen zweiten Schwingkörper bildet, der unter dem Einfluß äußerer Kräfte ebenfalls in Biegeschwingungen versetzt werden kann, durch die sein die Elektroden tragendes freies Ende ausgelenkt wird. Durch geeignete Bemessung des Schwingverhaltens von Staukörper und Elektrodenhalter soll erreicht werden, daß die Auslenkungen dieser beiden Schwingkörper auf der Höhe der Elektroden unter dem Einfluß von Vibrationen oder ähnlichen Störeinflüssen etwa gleich groß und gleich gerichtet sind, so daß solche Auslenkungen keine Kapazitätsänderungen zur Folge haben. Diese Bedingung läßt sich jedoch nur schwierig und unvollständig erfüllen, weil insbesondere die Ausbildung des ersten Schwingkörpers vorherrschend durch dessen Funktion als Staukörper bestimmt ist. Infolge des vorgegebenen Querschnitts und der erforderlichen Festigkeit des Staukörpers sind die durch die Wirbel-Druckschwankungen erzielbaren Schwingungsamplituden und demzufolge die dadurch verursachten Kapazitätsänderungen verhältnismäßig klein, was die Empfindlichkeit des Wirbelsensors beeinträchtigt. Ferner läßt sich das Schwingverhalten des Elektrodenhalters nicht gut an das Schwingverhalten des Staukörpers anpassen, so daß die Kompensation von Vibrationen und ähnlichen Störungen nur in unvollkommener Weise möglich ist. Auch ist es, insbesondere bei größeren Nennweiten des Strömungskanals, oft unerwünscht, daß der Staukörper selbst schwingt.

Aus der EP-A-0 110 321 ist es bekannt, den Staukörper eines Wirbelströmungsmessers im Strömungskanal feststehend zu montieren. Der Wirbelsensor dieses bekannten Wirbelströmungsmessers ist jedoch nicht mit einem kapazitiven, sondern mit einem piezoelektrischen Wandler ausgestattet. In dem Staukörper ist ein Hohlraum gebildet, der über Durchlässe mit dem Strömungskanal der Rohrleitung verbunden ist, und der piezoelektrische Wandler des Wirbelsensors ist mit einer in den Hohlraum des Staukörpers ragenden Druckempfangsplatte verbunden, die durch die in den Hohlraum übertragenen Wirbel-Druckschwankungen ausgelenkt wird. Die Auslenkungen der Druckempfangsplatte werden auf den piezoelektrischen Wandler übertragen und von diesem in elektrische Signale umgesetzt. Zur Kompensation von Vibrationen und ähnlichen Störeinflüssen ist ein zweiter piezoelektrischer Wandler gleicher Bauart außerhalb der Rohrleitung so angeordnet, daß er nur auf die Vibrationen und Störeinflüsse, jedoch nicht auf die Auslenkungen der Druckempfangsplatte anspricht. Dadurch ergibt sich eine beträchtliche Baulänge des Wirbelsensors, von dem ein großer Teil außerhalb der Rohrleitung liegt.

Die Kapazitätsmeßschaltung des in der US-A-4 362 061 beschriebenen Wirbelströmungsmessers enthält eine Brückenschaltung, die in zwei Brückenzweigen die beiden Kapazitäten enthält, die von zwei auf entgegengesetzten Seiten der beiden Schwingkörper angeordneten Elektrodenpaaren gebildet werden. An die eine Brückendiagonale wird eine Wechselspannung angelegt, so daß an der anderen Brückendiagonale eine Wechselspannung erhalten wird, die von der Differenz zwischen den beiden Kapazitäten abhängt. Da sich die beiden Kapazitäten infolge der Schwingbewegungen der beiden Schwingkörper gegensinnig ändern, ist die Brückenausgangs-Wechselspannung mit der Frequenz der Wirbeldruckschwankungen amplitudenmoduliert.

Aus der DE-A-31 43 114 ist eine Kapazitätsmeßschaltung bekannt, die nach dem Prinzip der "geschalteten Kondensatoren" ("switched capacitors") arbeitet. Diese Kapazitätsmeßschaltung enthält für jede Meßkapazität eine Umschaltanordnung, welche die Meßkapazität mit einer vorgegebenen Umschaltfrequenz periodisch abwechselnd zur Aufladung an eine konstante Spannung legt und zur Entladung mit einem Speicherkondensator verbindet, dessen Kapazität groß gegen die Meßkapazität ist und dessen Klemmenspannung durch einen kontrollierten Entladestrom im wesentlichen auf einem konstanten Bezugspotential gehalten wird. Die Kapazitätsmessung beruht auf der Messung des mittleren Entladestroms der periodisch abwechselnd auf eine konstante Spannung aufgeladenen und entladenen Meßkapazität. Gewöhnlich wird der mittlere Entladestrom durch einen Strom-Spannungs-Wandler in eine Spannung umgesetzt, die der Meßkapazität proportional ist. Durch Verwendung von zwei nach dem gleichen Prinzip arbeitenden Schaltungszweigen ist es insbesondere möglich, Kapazitätsdifferenzen zwischen zwei Meßkapazitäten mit großer Empfindlichkeit und Genauigkeit zu messen, selbst wenn die Kapazitätsdifferenzen sehr klein gegen die Meßkapazitäten sind.

Unabhängig von der Art der verwendeten Kapazitätsmeßschaltung besteht bei Wirbelströmungsmessern mit kapazitiven Wirbelsensoren eine Fehlerursache bei der Signalauswertung in dem Einfluß von Streukapazitäten und Störfeldern. Dieser Einfluß kann durch die Verwendung von Kabeln mit geerdeter Abschirmung nicht vollständig ausgeschaltet werden. Solche abgeschirmten Kabel können sogar ihrerseits veränderliche Störkapazitäten verursachen, wenn sie sich unter dem Einfluß der Vibrationen relativ zu dem Elektrodenhalter bewegen. Es ist bekannt, den Einfluß von Streukapazitäten und Störfeldern durch eine aktive Schirmung auszuschalten. Das Prinzip der aktiven Schirmung besteht darin, daß das Potential der Abschirmung stets dem Potential der abgeschirmten Elektrode nachgeführt wird. Nach dem Stand der Technik erfolgt die aktive Schirmung dadurch, daß das Potential der abgeschirmten Elektrode abgetastet und über einen Impedanzwandler an die Abschirmung angelegt wird. Diese Lösung ist aufwendig, weil als Impedanzwandler ein Operationsverstärker benötigt wird, der hohen Anforderungen an Geschwindigkeit und Eingangskapazität genügen muß.

Aufgabe der Erfindung ist die Schaffung eines Wirbelströmungsmessers der eingangs angegebenen Art, der bei sehr kleiner Bauhöhe eine optimale Kompensation von Vibrationen und ähnlichen mechanischen Störeinflüssen ergibt, ohne daß die Funktion des Staukörpers beeinträchtigt wird, und bei welchem der Einfluß von Streukapazitäten und Störfeldern auf das Meßergebnis mit geringem Aufwand wirksam ausgeschaltet ist.

Nach der Erfindung wird diese Aufgabe dadurch gelöst, daß in dem Staukörper ein Hohlraum gebildet ist, der über Durchlässe mit dem Strömungskanal der Rohrleitung in Verbindung steht, daß der erste Schwingkörper eine den Elektrodenhalter umgebende Sensorhülse ist, die in dem Hohlraum des Staukörpers angeordnet ist, daß die bzw. jede Kondensatorelektrode durch ein abgeschirmtes Kabel mit der Kapazitätsmeßschaltung verbunden ist, daß die Kapazitätsmeßschaltung für jede Meßkapazität eine Umschaltanordnung enthält, welche die Meßkapazität mit einer vorgegebenen Umschaltfrequenz periodisch abwechselnd zur Aufladung an eine konstante Spannung legt und zur Entladung mit einem Speicherkondensator verbindet, dessen Kapazität groß gegen die Meßkapazität ist und dessen Klemmenspannung durch einen kontrollierten Entladestrom im wesentlichen auf einem konstanten Bezugspotential gehalten wird, wobei die Größe des Entladestroms der Meßkapazität proportional ist und den Meßwert darstellt, und daß eine weitere Umschaltanordnung vorgesehen ist, welche die Kabelabschirmung mit der Umschaltfrequenz periodisch abwechselnd an die konstante Spannung und an das Bezugspotential legt.

Bei dem Wirbelströmungsmesser nach der Erfindung sind die beiden Schwingkörper des Wirbelsensors von dem Staukörper unabhängig. Der Staukörper kann daher starr und unbeweglich ausgebildet und montiert sein. Die Sensorhülse, die den ersten Schwingkörper des Wirbelsensors bildet, kann ausschließlich im Hinblick auf das erwünschte Schwingverhalten ausgebildet sein. Insbesondere kann die Sensorhülse so ausgebildet werden, daß sie auf die Wirbel-Druckschwankungen mit Biegeschwingungen großer Amplitude reagiert, wodurch der Wirbelsensor eine große Empfindlichkeit aufweist. Ferner können die Sensorhülse und der Elektrodenhalter als gleichartige Schwingkörper mit gleichem Schwingverhalten ausgebildet sein, beispielsweise als am einen Ende eingespannte Biegeschwinger, deren freie Enden die Kondensatorelektroden tragen. Sie verhalten sich dann unter der Einwirkung von Vibrationen oder ähnlichen Störeinflüssen in völlig gleicher Weise, so daß diese Störungen optimal kompensiert werden. Insbesondere ergibt die erfindungsgemäße Ausbildung des Wirbelströmungsmessers auch eine sehr kleine Bauhöhe, da der Staukörper mit dem in seiner Ausnehmung angeordneten Wirbelsensor nicht länger als der Durchmesser des Strömungskanals zu sein braucht.

Die Verwendung einer nach dem Prinzip der geschalteten Kondensatoren arbeitenden Kapazitätsmeßschaltung trägt gleichfalls zur Erzielung einer großen Empfindlichkeit bei. Vor allem aber ermöglicht die verwendete Kapazitätsmeßschaltung eine sehr wirksame aktive Schirmung mit sehr geringem zusätzlichem Aufwand. Hierfür wird die Tatsache ausgenutzt, daß das Potential der abzuschirmenden Elektrode nur zwei abwechselnde Werte annimmt, nämlich entweder das Bezugspotential oder das Potential der konstanten Spannung, auf die die Meßkapazität aufgeladen wird. Daher wird auf eine Abtastung und Rückführung des abzuschirmenden Potentials verzichtet; statt dessen werden einfach im Takt der Umschaltfrequenz abwechselnd die beiden Potentialwerte an die Abschirmung angelegt. Hierfür genügt eine weitere Umschaltanordnung einfacher Art. Als besonderer Vorteil erweist es sich, daß keine engen Zeittoleranzen für die Ansteuerung und Ansprechgeschwindigkeit der weiteren Umschaltanordnung bestehen, denn infolge des Prinzips der geschalteten Kondensatoren führen selbst erhebliche Zeitverschiebungen zwischen den Potentialänderungen der abgeschirmten Elektrode einerseits und der Abschirmung andererseits nicht zu Meßfehlern.

Ein Ausführungsbeispiel der Erfindung ist in der Zeichnung dargestellt. In der Zeichnung zeigt:

Fig. 1    eine Schnittansicht einer Ausführungsform des Wirbelströmungsmessers nach der Erfindung,

Fig. 2    eine Schnittansicht des Wirbelsensors des Wirbelströmungsmessers von Fig. 1,

Fig. 3    eine Stirnansicht des Elektrodenhalters des Wirbelsensors von Fig. 2,

Fig. 4    die Kapazitätsmeßschaltung des Wirbelströmungsmessers und

Fig. 5    Zeitdiagramme zur Erläuterung der Funktionsweise der Kapazitätsmeßschaltung von Fig. 4.

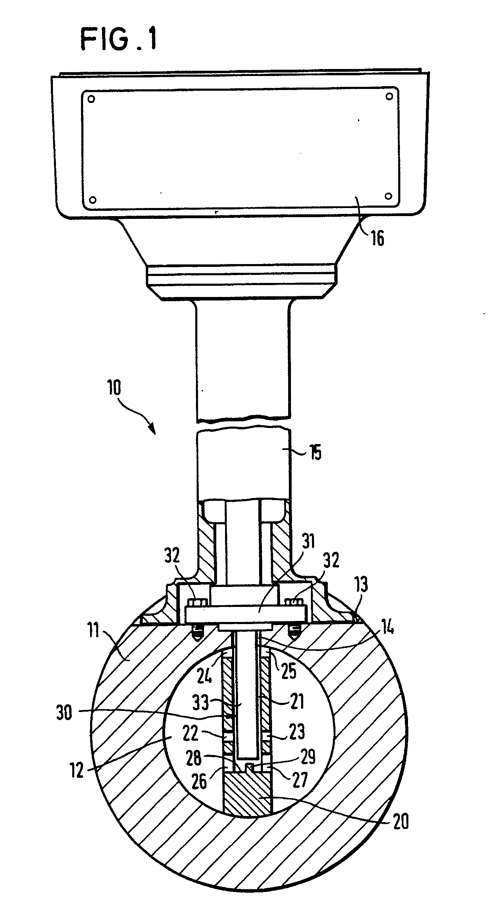

Der in Fig. 1 der Zeichnung dargestellte Wirbelströmungsmesser 10 hat ein im Querschnitt dargestelltes Meßrohr 11, das in die Rohrleitung eingefügt wird, durch die das Strömungsmedium (Flüssigkeit, Gas) fließt, dessen Strömungsgeschwindigkeit gemessen werden soll. Das Strömungsmedium fließt also in der Darstellung von Fig. 1 senkrecht zur Zeichenebene durch den Strömungskanal 12 des Meßrohres 11. An der in Fig. 1 oben liegenden Seite des Meßrohres 11 ist eine Abflachung 13 gebildet, von der eine radiale Bohrung 14 in das Innere des Meßrohres geführt ist. Auf der Abflachung 13 ist eine rohrförmige Gehäusestütze 15 befestigt, die an dem dem Meßrohr 11 entgegengesetzten Ende ein Schaltungsgehäuse 16 trägt.

Im Innern des Meßrohres 11 ist ein Staukörper 20 angeordnet, der sich diametral über den ganzen Durchmesser des Strömungskanals 12 erstreckt und an beiden Enden fest mit der Wand des Meßrohres 11 verbunden ist. Der Staukörper 20 ist in einer bei Wirbelströmungsmessern bekannten Weise so ausgebildet, daß er in dem Strömungsmedium Kármán'sche Wirbel erzeugt. Der Staukörper 20 ist ein prismatischer Körper von gleichbleibendem Querschnitt, der beispielsweise die Form eines gleichschenkligen Dreiecks hat, dessen Grundlinie der Strömungsrichtung zugewandt ist. An dem Staukörper 20 entstehen zwei parallele Wirbelstraßen, wobei die Wirbel der einen Wirbelstraße gegen die Wirbel der anderen Wirbelstraße versetzt sind. Die Messung der Strömungsgeschwindigkeit beruht darauf, daß der Abstand zwischen aufeinanderfolgenden Wirbeln in jeder Wirbelstraße über einen großen Bereich von Strömungsgeschwindigkeiten nahezu konstant ist. Die Folgefrequenz der Kármán'schen Wirbel ist somit der Strömungsgeschwindigkeit proportional. Der Wirbelströmungsmesser ist daher so ausgebildet, daß er ein Signal liefert, das für die Folgefrequenz der Kármán'schen Wirbel kennzeichnend ist.

Zu diesem Zweck ist in dem Staukörper 20 ein axialer Hohlraum 21 ausgebildet, der sich von dem in Fig. 1 oben liegenden Ende des Staukörpers über den größeren Teil von dessen Länge erstreckt. Der Staukörper 20 ist so im Meßrohr 11 montiert, daß der Hohlraum 21 koaxial zu der Bohrung 14 liegt. Der Hohlraum 21 ist vorzugsweise zylindrisch und hat den gleichen Innendurchmesser wie die Bohrung 14. Er steht mit dem Strömungskanal 12 des Meßrohres 11 über mehrere Durchlässe in Verbindung, die quer zur Strömungsrichtung durch den Staukörper 20 geführt sind und einander paarweise gegenüberliegen. Ein erstes Paar von Durchlässen 22, 23 liegt etwa auf der Höhe der Achse des Strömungskanals 12, also auf der halben Höhe des Staukörpers 20. Ein zweites Paar von Durchlässen 24, 25 liegt am oberen Ende des Staukörpers 20 unmittelbar an der Wand des Meßrohres 11. Ein drittes Paar von Durchlässen 26, 27 ist am unteren Ende des Hohlraums 21 auf der Höhe der den Hohlraum begrenzenden Stirnwand 28 angebracht. In der Mitte zwischen den beiden unteren Durchlässen 26 und 27 ist an der Stirnwand 28 eine Trennwand 29 geringer Höhe ausgebildet, die parallel zur Achse des Meßrohres 11 liegt.

Ein Wirbelsensor 30 ragt durch die Bohrung 14 in den Hohlraum 21, wo er sich fast bis zu der Trennwand 29 erstreckt. Der Wirbelsensor 30 wird von einem Flansch 31 getragen, der mittels Schrauben 32 auf der Abflachung 13 befestigt ist.

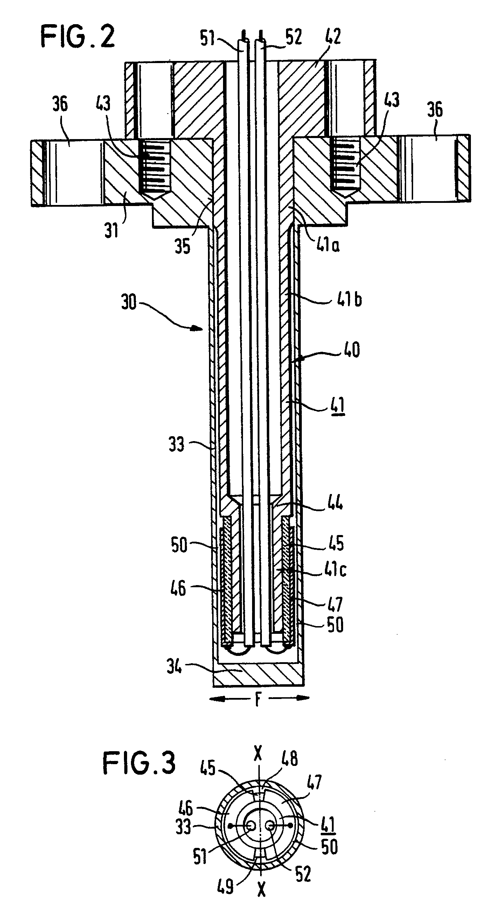

Der Wirbelsensor 30 ist in der Schnittansicht von Fig. 2 in näheren Einzelheiten dargestellt. Er besteht aus zwei Bauteilen. Das erste Bauteil ist eine rohrförmige Sensorhülse 33, die am einen Ende mit dem Flansch 31 verbunden ist und an dem entgegengesetzten Ende durch eine Stirnwand 34 dicht verschlossen ist. Der Flansch 31 hat eine Mittelöffnung 35, die koaxial zu der Sensorhülse 33 liegt und deren Durchmesser gleich dem Innendurchmesser der Sensorhülse 33 ist. Ferner hat der Flansch 31 mehrere um den Umfang verteilte Bohrungen 36 für die Durchführung der Schrauben 32, mit denen er auf der Abflachung 13 (Fig. 1) befestigt wird. Die Sensorhülse 33 kann zusammen mit der Stirnwand 34 in einem Stück mit dem Flansch 31 aus dem gleichen Material geformt sein, beispielsweise aus Stahl.

Das zweite Bauteil des Wirbelsensors 30 ist ein Elektrodenhalter 40, der durch die Mittelöffnung 35 des Flansches 31 in das Innere der Sensorhülse 33 ragt. Der Elektrodenhalter 40 besteht aus einem Rohr 41, das mit einem zweiten Flansch 42 verbunden ist und vorzugsweise in einem Stück mit dem Flansch 42 hergestellt ist, beispielsweise gleichfalls aus Stahl. Der Flansch 42 ist mittels Schrauben 43 auf der Oberseite des Flansches 31 befestigt, so daß der Elektrodenhalter 34 durch die Mittelöffnung 35 in das Innere der Sensorhülse 33 ragt, wo er sich bis nahe zu der Stirnwand 34 erstreckt.

Das Rohr 41 des Elektrodenhalters 34 hat drei Abschnitte unterschiedlichen Durchmessers. Ein erster Abschnitt 41a, der in der Mittelöffnung 35 des Flansches 31 sitzt, hat einen Außendurchmesser, der gleich dem Durchmesser der Mittelöffnung 35 ist, wodurch ein fester Sitz und eine genaue Positionierung des Elektrodenhalters gewährleistet sind. Der Außendurchmesser eines zweiten Abschnitts 41b, der den größten Teil der Länge des Elektrodenhalters ausmacht, ist etwas kleiner als der Innendurchmesser der Sensorhülse 33, so daß rings um den Umfang ein schmaler ringförmiger Spalt zwischen dem Abschnitt 41b und der Sensorhülse 33 besteht. Der Endabschnitt 41c des Rohres 41 schließt sich über eine nach innen einspringende Schulter 44 an den mittleren Abschnitt 41b an und hat einen wesentlichkleineren Durchmesser. Dieser Endabschnitt 41c trägt eine Isolierhülse 45, deren Außendurchmesser etwas kleiner als der Außendurchmesser des mittleren Abschnitts 41b ist. Die Isolierhülse 45 kann beispielsweise aus Keramik bestehen. Auf der Isolierhülse 45 sind zwei Kondensatorelektroden 46 und 47 angebracht, die den größten Teil der Umfangsfläche und der unteren Stirnfläche der Isolierhülse 45 bedecken, aber an zwei einander diametral gegenüberliegenden Stellen durch Spalte 48, 49 mechanisch und elektrisch voneinander getrennt sind, wie die untere Stirnansicht von Fig. 3 zeigt. Die Kondensatorelektroden 46, 47 können durch eine auf die Isolierhülse 45 aufgebrachte Metallisierung oder aus aufgeklebten Metallfolien gebildet sein. Die Dicken der Isolierhülse 45 und der Kondensatorelektroden 46, 47 sind so bemessen, daß zwischen den Kondensatorelektroden 46, 47 und der Innenfläche der Sensorhülse 33 rings um den Umfang ein ringförmiger Spalt 50 von geringer Spaltbreite besteht.

Jede Kondensatorelektrode 46, 47 bildet mit dem gegenüberliegenden, als Gegenelektrode wirkenden Abschnitt der Sensorhülse 33 einen Kondensator, dessen Dielektrikum Luft ist. Die Kapazität jedes dieser Kondensatoren ist zu der Flächenausdehnung der Kondensatorelektrode proportional und zu der Spaltbreite zwischen der Kondensatorelektrode und der Sensorhülse umgekehrt proportional.

An den die untere Stirnfläche der Isolierhülse 45 bedeckenden Abschnitten der Kondensatorelektroden 46 und 47 sind die Innenleiter von zwei abgeschirmten Kabeln 51, 52 angelötet, die durch das hohle Innere des Elektrodenhalters 40 und durch die rohrförmige Gehäusestütze 15 geführt sind und die Kondensatorelektroden 46, 47 mit der im Schaltungsgehäuse 16 untergebrachten elektronischen Auswerteschaltung des Wirbelströmungsmessers verbinden.

Wie Fig. 1 zeigt, ist der Außendurchmesser der Sensorhülse 33 des Wirbelsensors 30 etwas kleiner als der Innendurchmesser des Hohlraums 21 im Staukörper 20, so daß die Sensorhülse 33 allseitig im Abstand von der Wand des Hohlraums 21 liegt. Es besteht somit in dem Hohlraum 21 rings um die Sensorhülse 33 ein freier Raum, der über die Durchlässe 22 bis 27 mit dem Strömungsmedium gefüllt ist, das durch den Strömungskanal 12 des Meßrohres 11 fließt. Der Wirbelsensor 30 ist so in dem Staukörper 20 eingebaut, daß die Kondensatorelektroden 46, 47 symmetrisch in bezug auf die axiale Mittelebene liegen, die die Achsen des Meßrohres 11 und des Staukörpers 20 enthält und in Fig. 3 durch die Linie X-X angedeutet ist.

Der beschriebene Aufbau des Wirbelströmungsmessers 10 ergibt die folgende Funktionsweise:

Jeder der beiden Bestandteile des Wirbelsensors 30, nämlich die Sensorhülse 33 und der Elektrodenhalter 40, stellt einen langgestreckten Schwingkörper dar, der am einen Ende gehalten ist und dessen freies Ende durch die Einwirkung äußerer Kräfte aus der in Fig. 2 dargestellten Ruhestellung quer zu seiner Längsrichtung ausgelenkt werden kann.

Wenn durch das Meßrohr 11 ein Strömungsmedium fließt und sich die beiden Kármán'schen Wirbelstraßen am Staukörper 20 bilden, entstehen zu beiden Seiten des Staukörpers gegenphasige periodische Druckschwankungen, die durch die Durchlässe 22 und 23 in den Hohlraum 21 übertragen werden und auf die Sensorhülse 33 einwirken. Unter dem Einfluß der von diesen Wirbel-Druckschwankungen ausgeübten Kräfte wird die Sensorhülse 33 quer zu ihrer Längsrichtung und quer zur Strömungsrichtung abwechselnd in entgegengesetzten Richtungen ausgelenkt. Da die Sensorhülse 33 am oberen Ende fest eingespannt ist, besteht die Auslenkung in einer Abbiegung, so daß die Sensorhülse unter der Einwirkung der Wirbel-Druckschwankungen Biegeschwingungen ausführt, deren Frequenz gleich der Frequenz der Druckschwankungen ist. Die Biegeschwingungs-Eigenresonanzfrequenz der Sensorhülse 33 ist sehr viel höher als die höchste vorkommende Frequenz der Wirbel-Druckschwankungen, so daß die Biegeschwingungen der Sensorhülse 33 unterkritisch angeregt werden und nach Frequenz und Phase genau den Wirbel-Druckschwankungen folgen. Die Amplituden der Biegeschwingungen sind sehr klein, und die Bestandteile des Wirbelsensors 30 sind so ausgebildet und bemessen, daß die Sensorhülse 33 bei den größten vorkommenden Schwingungsamplituden weder an der Wand des Hohlraums 21 noch am Elektrodenhalter 40 anschlägt.

Die oberen Durchlässe 24, 25 und die unteren Durchlässe 26, 27 im Staukörper 20 erlauben eine freie Zirkulation des Strömungsmediums zwischen dem Hohlraum 21 und dem Strömungskanal 12, so daß das Strömungsmedium ungehindert den Biegeschwingungen der Sensorhülse 33 ausweichen und folgen kann. Die Trennwand 29 zwischen den unteren Durchlässen 26 und 27 verhindert einen direkten Druckausgleich um das untere Ende der Sensorhülse herum.

Der im Innern der dicht verschlossenen Sensorhülse 33 angeordnete Elektrodenhalter 40 steht mit dem Strömungsmedium nicht in Kontakt und ist daher von dessen Druckschwankungen vollständig entkoppelt. Der Elektrodenhalter 40 wird daher durch die Wirbel-Druckschwankungen nicht in Biegeschwingungen versetzt, sondern bleibt in Ruhe. Demzufolge bewegt sich das freie Ende der Sensorhülse 33 unter dem Einfluß der Wirbel-Druckschwankungen relativ zu dem feststehenden freien Ende des Elektrodenhalters, wie in Fig. 2 durch den Doppelpfeil F angedeutet ist. Bei dieser Relativbewegung verändert sich die Breite des Luftspalts 50 zwischen den Elektroden 46, 47 und der gegenüberliegenden Wand der Sensorhülse 33 gegensinnig: Wenn der Abstand zwischen der Sensorhülse 33 und der Elektrode 46 abnimmt, wird gleichzeitig der Abstand zwischen der Sensorhülse 33 und der Elektrode 47 größer, und umgekehrt. Demzufolge ändern sich auch die Kapazitätswerte der von den beiden Elektroden 46, 47 und der Sensorhülse 33 gebildeten Kondensatoren gegensinnig mit der Frequenz der Wirbel-Druckschwankungen. Die im Schaltungsgehäuse 16 untergebrachte elektronische Auswerteschaltung des Wirbelströmungsmessers kann daher aufgrund dieser Kapazitätsänderungen ein elektrisches Signal erzeugen, das für die Frequenz der Wirbel-Druckschwankungen und somit auch für die Strömungsgeschwindigkeit im Meßrohr 11 kennzeichnend ist.

Wenn dagegen auf das System äußere Kräfte einwirken, die über die Einspannstellen auf die beiden Schwingkörper, nämlich die Sensorhülse 33 und den Elektrodenhalter 40 übertragen werden, können die beiden Schwingkörper durch solche äußeren Kräfte gemeinsam in Biegeschwingungen versetzt werden. Solche äußeren Kräfte können insbesondere durch Vibrationen entstehen, die das Meßrohr und damit die Einspannstelle in eine translatorische Schwingbewegung in irgendeiner Achsrichtung versetzen oder auch die beiden Schwingkörper um ihre Einspannstellen zu drehen suchen. Durch solche äußeren Einflüsse werden die freien Enden der Sensorhülse 33 und des Elektrodenhalters 40 gleichsinnig ausgelenkt. Durch geeignete Ausbildung und Bemessung dieser beiden Teile kann erreicht werden, daß sich bei diesen gleichsinnigen Auslenkungen die Breite des Spaltes 50 zwischen den Kondensatorelektroden 46, 47 und der Sensorhülse 33 nicht merklich ändert. Solche äußeren Einflüsse verursachen daher keine Änderung der beiden Kapazitäten des Wirbelsensors. Wenn dagegen gleichzeitig mit solchen äußeren Einflüssen auch Wirbel-Druckschwankungen vorhanden sind, verursachen diese eine zusätzliche Auslenkung der Sensorhülse 33, die der gemeinsamen Auslenkung der beiden Schwingkörper überlagert ist und eine gegensinnige Änderung der beiden Kapazitäten zur Folge hat. Der beschriebene Wirbelsensor ist daher unempfindlich gegen Vibrationen in beliebigen Achsrichtungen oder ähnliche Störeinflüsse, er ermöglicht aber eine sichere Detektion der von Kármán'schen Wirbeln verursachten Druckschwankungen auch beim Vorhandensein solcher äußerer Störeinflüsse.

Die elektronische Auswerteschaltung ist vorzugsweise so ausgebildet, daß sie ein Signal erzeugt, das von der Differenz der beiden Kapazitäten des Wirbelsensors abhängt. Da sich die beiden Kapazitäten gegensinnig ändern, entspricht das Differenzsignal dem doppelten Wert der Kapazitätsänderung, während die gleich großen Grundkapazitäten aus dem Differenzsignal herausfallen. Dies ermöglicht einerseits eine sehr genaue und empfindliche Detektion der Kapazitätsänderungen und andererseits die Eliminierung des Einflusses weiterer Störgrößen, die die Funktion des Wirbelströmungsmessers beeinträchtigen können. Dies gilt insbesondere für die Temperatur und den statischen Druck des Strömungsmediums. Der Wirbelströmungsmesser kann unter sehr verschiedenen Temperatur- und Druckverhältnissen zum Einsatz kommen, und auch innerhalb des gleichen Einsatzgebietes können sich die Temperatur und der Druck des Strömungsmediums in weiten Bereichen ändern.

Temperaturänderungen wirken sich infolge der Wärmeausdehnungskoeffizienten der für die verschiedenen Bestandteile verwendeten Materialien auf die Abmessungen der Bestandteile des Wirbelsensors aus. Wenn die Bestandteile gleiche Wärmeausdehnungskoeffizienten haben, ändern sich ihre Abmessungen im gleichen Verhältnis, so daß sich für die beiden Kapazitäten keine Änderungen ergeben. Bei unterschiedlichen Wärmeausdehnungskoeffizienten der Bestandteile haben unterschiedliche Längenänderungen der Sensorhülse und des Elektrodenhalters keinen Einfluß auf die beiden Kapazitäten. Unterschiedliche Durchmesseränderungen dieser Teile können zwar zu Änderungen der Grundkapazitäten führen, doch ist dies für die Signalauswertung ohne Bedeutung, weil die Grundkapazitäten bei der Bildung des Differenzsignals herausfallen; die allein erfaßte Kapazitätsdifferenz bleibt von temperaturbedingten Änderungen unbeeinflußt.

Änderungen des statischen Druckes des Strömungsmediums können den Querschnitt der Sensorhülse durch Verformung verändern. Dadurch ändert sich auch die Breite des Luftspalts 50 und somit der Wert der beiden Grundkapazitäten. Da sich wegen des symmetrischen Aufbaus eine solche Querschnittsänderung auf die gleiche Weise auf die beiden Grundkapazitäten auswirkt, hebt sie sich bei der Differenzbildung wieder auf, so daß das Differenzsignal von Änderungen des statischen Drucks nicht beeinflußt wird.

In diesem Zusammenhang ist hervorzuheben, daß das beschriebene Ausführungsbeispiel des Wirbelsensors wegen der zylindrischen Form der Sensorhülse eine besonders gute Druckfestigkeit aufweist und sich daher für Anwendungen eignet, bei denen hohe Drücke oder große Druckschwankungen auftreten.

Eine weitere Fehlerursache bei der Signalauswertung kann darin bestehen, daß sich die abgeschirmten Kabel 51 und 52, über welche die Kondensatorelektroden 46 und 47 mit der Auswerteschaltung verbunden sind, unter dem Einfluß von Vibrationen oder anderen Störeinflüssen relativ zu dem Elektrodenhalter bewegen, so daß von der Auswerteschaltung veränderliche Störkapazitäten erfaßt werden. Eine solche Relativbewegung der Kabel kann durch eine Fixierung verhindert werden, beispielsweise mittels einer Vergußmasse. Der Einfluß von Störkapazitäten kann jedoch auch durch eine aktive Schirmung des Kabels ausgeschaltet werden. Das Prinzip der aktiven Schirmung besteht bekanntlich darin, daß das Potential der Abschirmung stets dem Potential der Meßelektrode nachgeführt wird. Im oberen Bereich des Wirbelsensors ist eine solche aktive Schirmung zur Verringerung der statischen Kapazität und der Berührungsempfindlichkeit auf jeden Fall erforderlich.

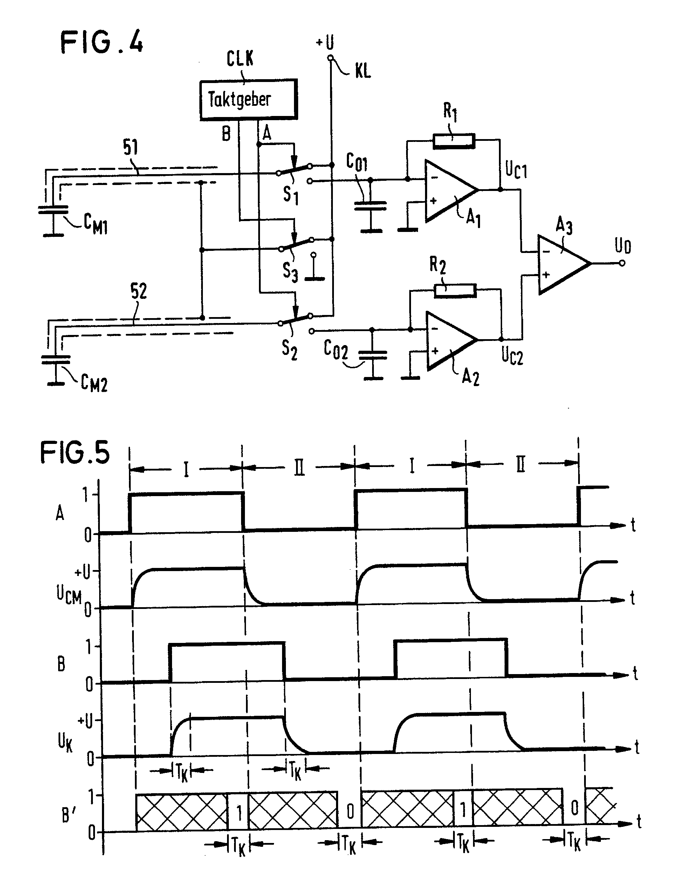

Fig. 4 zeigt eine Kapazitätsmeßschaltung, die sich besonders gut als Eingangsstufe der elektronischen Auswerteschaltung des beschriebenen Wirbelströmungsmessers eignet. Diese Kapazitätsmeßschaltung ist nach dem aus der DE-A- 31 43 114 bekannten Prinzip der "geschalteten Kondensatoren" (switched capacitors") ausgebildet. Sie ermöglicht eine sehr empfindliche und genaue Messung von Kapazitätsänderungen, auch wenn diese sehr klein sind. Zusätzlich ist die Kapazitätsmeßschaltung von Fig. 4 so ausgebildet, daß sie auf sehr einfache Weise eine aktive Schirmung ermöglicht.

Fig. 4 zeigt die beiden Meßkapazitäten $C_{M1}$ und $C_{M2}$ des Wirbelsensors 30, wobei die Meßkapazität $C_{M1}$ die Kapazität ist, die zwischen der an Masse liegenden Sensorhülse 33 und der über das abgeschirmte Kabel 51 mit der Auswerteschaltung verbundenen Kondensatorelektrode 46 besteht. In entsprechender Weise ist die Meßkapazität $C_{M2}$ die Kapazität, die zwischen der an Masse liegenden Sensorhülse 33 und der über das abgeschirmte Kabel 52 mit der Auswerteschaltung verbundenen Kondensatorelektrode 47 besteht. Die Abschirmungen der beiden Kabel 51 und 52 sind durch gestrichelte Linien angedeutet.

Die Kapazitätsmeßschaltung enthält zwei völlig gleiche Schaltungszweige, die jeweils einer der beiden Meßkapazitäten zugeordnet sind. Der mit der Meßkapazität $C_{M1}$ über das Kabel 51 verbundene Schaltungszweig enthält einen Umschalter $S_1$, der in der einen Stellung, die in Fig. 4 gezeigt ist, den Innenleiter des Kabels 51 mit einer Klemme KL verbindet, die gegen Masse eine konstante positive Gleichspannung $+U$ führt, die beispielsweise die Betriebsspannung der Schaltung ist. In der anderen Stellung verbindet der Umschalter $S_1$ die Meßkapazität $C_{M1}$ mit einem Speicherkondensator $C_{01}$, dessen Kapazität sehr groß gegen die Meßkapazität $C_{M1}$ ist. An die miteinander verbundenen Klemmen des Umschalters $S_1$ und des Speicherkondensators $C_{01}$ ist auch der invertierende Eingang eines Operationsverstärkers $A_1$ angeschlossen, dessen nichtinvertierender Eingang an Masse liegt und dessen Rückkopplungskreis zwischen dem Ausgang und dem invertierenden Eingang einen Widerstand $R_1$ enthält.

Der der Meßkapazität $C_{M2}$ zugeordnete Schaltungszweig enthält in entsprechender Weise einen Umschalter $S_2$ einen Speicherkondensator $C_{02}$ und einen Operationsverstärker $A_2$ mit einem Rückkopplungswiderstand $R_2$.

Die Ausgänge der beiden Operationsverstärker $A_1$ und $A_2$ sind mit den beiden Eingängen eines Differenzverstärkers $A_3$ verbunden.

Die beiden Umschalter $S_1$ und $S_2$ werden durch ein Steuersignal A betätigt, das an einem Ausgang eines Taktgebers CLK abgegeben wird. Der Taktgeber CLK gibt an einem zweiten Ausgang ein Steuersignal B ab, das einen Umschalter $S_3$ betätigt, der die Abschirmungen der beiden Kabel 51 und 52 in der einen Stellung an die Spannung +U der Klemme KL und in der anderen Stellung an Masse legt.

Die Funktionsweise der Kapazitätsmeßschaltung von Fig. 4 soll anhand der Zeitdiagramme von Fig. 5 erläutert werden. Die Beschreibung des der Meßkapazität $C_{M1}$ zugeordneten Schaltungszweigs gilt natürlich in gleicher Weise auch für den anderen Schaltungszweig.

Das Diagramm A zeigt den zeitlichen Verlauf des Steuersignals A, das die beiden Umschalter $S_1$ und $S_2$ betätigt. Das Steuersignal A nimmt periodisch abwechselnd zwei Zustände 0 oder 1 an, wobei angenommen wird, daß jeder Umschalter $S_1$, $S_2$ beim Wert 1 des Steuersignals A die in Fig. 4 gezeigte Stellung hat, in der er die zugeordnete Meßkapazität $C_{M1}$, $C_{M2}$ mit der Klemme KL verbindet, während er beim Wert 0 des Steuersignals A die zugeordnete Meßkapazität von der Klemme KL abtrennt und dafür mit dem zugeordneten Speicherkondensator $C_{01}$ bzw. $C_{02}$ verbindet.

Das Diagramm $U_{CM}$ von Fig. 5 zeigt den zeitlichen Verlauf der Spannung an jeder Meßkapazität $C_{M1}$, $C_{M1}$ und somit auch die Spannung auf dem Innenleiter des zugeordneten Kabels 51 bzw. 52. Wenn man nur den ersten Schaltungszweig betrachtet, so wird in jeder Phase I, die dem Wert 1 des Steuersignals A entspricht, die Meßkapazität $C_{M1}$ auf die Spannung +U aufgeladen. Die Aufladung erfolgt wegen der unvermeidlichen Zeitkonstante des Ladekreises nicht verzögerungsfrei, doch ist die Dauer der Phase 1 so groß bemessen, daß die Spannung $U_{CM}$ an der Meßkapazität $C_{M1}$ mit Sicherheit den vollen Wert +U erreicht.

In der Phase II, die dem Wert 0 des Steuersignals A entspricht, entlädt sich die Meßkapazität $C_{M1}$ mit der entsprechenden Zeitkonstante in den Speicherkondensator $C_{01}$. Da die Kapazität des Speicherkondensators $C_{01}$ sehr groß gegen die Meßkapazität $C_{M1}$ ist, ist die Spannung an diesen beiden Kapazitäten nach dem Ladungsausgleich sehr klein gegen die Spannung +U. Die Dauer der Phase II, die vorzugsweise gleich der Dauer der Phase I ist, ist so groß bemessen, daß der vollständige Ladungsausgleich mit Sicherheit stattfinden kann.

In der folgenden Phase I wird die Meßkapazität $C_{M1}$ wieder auf die Spannung +U aufgeladen, während die Ladung des Speicherkondensators $C_{01}$

durch den als Strom-Spannungs-Wandler wirkenden Operationsverstärker $A_1$ langsam abgeführt wird. Der Ladungsausgleich erfolgt durch einen Strom, der über den Widerstand $R_1$ fließt und bewirkt, daß die Spannung am Speicherkondensator $C_{01}$ im Mittel im wesentlichen auf dem Wert Null gehalten wird. Der über den Widerstand $R_1$ fließende Strom ist gleich dem Mittelwert des Stroms, der vom der Meßkapazität $C_{M1}$ entladen wird. Für die Aufrechterhaltung dieses Stroms nimmt die Ausgangsspannung des Operationsverstärkers $A_1$ einen Wert $U_{C1}$ an, der der Meßkapazität $C_{M1}$ exakt proportional ist.

In gleicher Weise nimmt die Ausgangsspannung des Operationsverstärkers $A_2$ des anderen Schaltungszweiges einen Wert $U_{C2}$ an, der dem Wert der Meßkapazität $C_{M2}$ exakt proportional ist.

Der Differenzverstärker $A_3$ bildet die Differenz der beiden Spannungen $U_{C1}$ $U_{C2}$ und liefert am Ausgang eine Spannung $U_D$, die der Differenz zwischen den beiden Meßkapazitäten $C_{M1}$, $C_{M2}$ exakt proportional ist.

Wenn keine besonderen Maßnahmen getroffen werden, addiert sich die Kapazität jedes der beiden abgeschirmten Kabel 51, 52 zu der Meßkapazität, und Kapazitätsänderungen des Kabels wirken sich auf die Messung aus. Zur Ausschaltung des Einflusses der Kabelkapazitäten wird bei der Kapazitätsmeßschaltung von Fig. 4 eine aktive Schirmung angewendet, indem das Potential der Kabelabschirmung dem Potential auf dem abgeschirmten Innenleiter des Kabels nachgeführt wird. Nach dem Stand der Technik erfolgt eine solche aktive Schirmung dadurch, daß das Potential der abgeschirmten Leitung dauernd abgetastet und über einen Impedanzwandler an die Abschirmung gelegt wird. Im Gegensatz dazu erfolgt bei der Kapazitätsmeßschaltung von Fig. 4 die aktive Schirmung auf besonders einfache und wirksame Weise mit Hilfe des vom Steuersignal B betätigten Umschalters $S_3$, ohne daß eine Rückführung des Potentials der abgeschirmten Leitung notwendig ist.

Das Diagramm B von Fig. 5 zeigt den zeitlichen Verlauf des Steuersignals B, das mit der gleichen Folgefrequenz wie das Steuersignal A periodisch abwechselnd die Werte 0 und 1 annimmt. Das Diagramm $U_K$ von Fig. 5 zeigt den zeitlichen Verlauf der Spannung an den Abschirmungen der beiden Kabel 51 und 52. Wenn das Steuersignal B den Wert 1 annimmt, werden die beiden Kabelabschirmungen an die Spannung +U gelegt, und die Spannung $U_K$ erreicht den Spannungswert +U nach einer durch die Zeitkonstante bedingten Umladezeit $T_K$. Wenn das Steuersignal B den Wert 0 annimmt, werden die Kabelabschirmungen an Massepotential gelegt, und die Spannung $U_K$ erreicht den Spannungswert 0 wieder nach der Umladezeit $T_K$.

Aus dem Diagramm von Fig. 5 ist folgendes zu erkennen: Wenn die Steuersignale A und B genau phasengleich sind, haben auch die Spannungen $U_{CM}$ und $U_K$ im wesentlichen den gleichen zeitlichen Verlauf. Damit ist die Bedingung der aktiven Schirmung erfüllt, daß das Potential der Abschirmung ständig dem Potential der abgeschirmten Elektrode folgt. In Fig. 5 sind aber die Steuersignale A und B absichtlich gegeneinander phasenverschoben dargestellt, um zu zeigen, daß es nicht auf die Einhaltung exakter zeitlicher Beziehungen ankommt. Es gibt dann zwar in jeder Phase II am Anfang einen Zeitabschnitt, in welchem sich die Meßkapazität $C_{M1}$ bereits in den Speicherkondensator $C_{01}$ entlädt, während an der Kabelabschirmung noch die Spannung $+U$ anliegt, so daß sich die Abschirmkapazität auflädt und die entsprechende Ladung in den Speicherkondensator $C_{01}$ fließt; wenn jedoch anschließend in der gleichen Phase II die Abschirmung an Masse gelegt wird, während der abgeschirmte Leiter noch mit dem Speicherkondensator $C_{01}$ verbunden ist, fließt die gleiche Ladung wieder vom Speicherkondensator $C_{01}$ in die Abschirmkapazität zurück. Diese Ladungsverschiebungen heben sich also im Mittel gegenseitig auf, so daß auf dem Speicherkondensator $C_{01}$ effektiv nur die zu erfassende Ladung der Meßkapazität $C_{M1}$ verbleibt, die allein für den Strom über den Widerstand $R_1$ und damit für die Spannung $U_{C1}$ am Ausgang des Operationsverstärkers $A_1$ maßgeblich ist.

Die Anforderungen an die zeitliche Lage des Steuersignals B in bezug auf das Steuersignal A sind also unkritisch. Es sind nur die zeitlichen Bedingungen einzuhalten, daß die Abschirmspannung $U_K$ vor dem Beginn jeder Phase II den Spannungswert $+U$ und vor dem Beginn jeder Phase I den Spannungswert 0 erreicht haben muß. Unter Berücksichtigung der Umladezeit $T_K$ bedeutet dies, daß das Steuersignal B spätestens um die Zeitspanne $T_K$ vor dem Beginn jeder Phase II auf den Wert 1 und spätestens um die Zeitspanne $T_K$ vor dem Beginn jeder Phase I auf den Wert 0 gebracht sein muß. Daraus ergeben sich die im Diagramm B'dargestellten zeitlichen Bedingungen: Das Steuersignal B kann in den kreuzschraffierten Bereichen beliebige Werte haben und muß nur in den mit "1" bzw. "0" markierten Bereichen der Dauer $T_K$ den angegebenen Signalwert haben.

Die Umschalter $S_1$, $S_2$, $S_3$ sind in Fig. 4 nur der Deutlichkeit wegen als mechanische Schalter dargestellt. In Wirklichkeit handelt es sich hierbei natürlich um sehr schnelle elektronische Schalter, beispielsweise MOS-Feldeffekttransistoren. Da solche elektronischen Schalter nicht als Umschalter, sondern als einfache Ein-Aus-Schalter wirken, muß jeder Umschalter von Fig. 4 durch zwei derartige elektronische Schalter ersetzt werden, die durch das betreffende Steuersignal gegenphasig angesteuert werden. Um sicherzustellen, daß nicht die beiden elektronischen Schalter gleichzeitig geöffnet sind, kann es dann zweckmäßig sein, zwischen die aufeinanderfolgenden Schaltphasen jeweils kurze Intervalle einzufügen, in denen die beiden elektronischen Schalter, die zusammen einen Umschalter bilden, gleichzeitig gesperrt sind.

Der Umschalter $S_3$ kann auch durch einen Schwellenwert-Komparator ersetzt werden, der das Steuersignal A empfängt und an seinem Ausgang, je nach dem Wert seines Eingangssignals, entweder die Spannung $+U$ oder die Spannung 0 abgibt. Dadurch ergibt sich eine weitere Vereinfachung der Schaltung.

Bei dem zuvor beschriebenen Wirbelströmungsmesser bilden die beiden relativ zueinander verstellbaren Bestandteile des Wirbelsensors, also die Sensorhülse 33 und der Elektrodenhalter 34, einen als mechano-elektrischen Wandler wirkenden kapazitiven Sensor, der relative Verstellungen zwischen den beiden Bestandteilen in Kapazitätsänderungen umsetzt. Die Bildung von zwei gegensinnig veränderbaren Meßkapazitäten mit Hilfe von zwei Kondensatorelektroden ergibt dabei den Vorteil, daß die Kapazitätsmeßschaltung ein mittelwertfreies Differenzsignal bilden kann, das nur die Kapazitätsänderungen darstellt. Diese Maßnahme ist aber keineswegs zwingend; die Messung der Frequenz der Wirbel-Druckschwankungen ist auch dann möglich, wenn der Elektrodenhalter nur eine Kondensatorelektrode trägt und somit nur eine Meßkapazität vorhanden ist. In diesem Fall entfällt einfach der zweite Schaltungszweig der Kapazitätsmeßschaltung von Fig. 4, und die Information über die Strömungsgeschwindigkeit ist in den Änderungen der Ausgangsspannung des verbliebenen Schaltungszweigs enthalten.

Die beschriebene Kompensation von Vibrationen und anderen Störeinflüssen tritt auch in diesem Fall in vollem Umfang ein.

Sowohl hinsichtlich der Kompensation von Vibrationen und anderen Störeinflüssen als auch hinsichtlich der Empfindlichkeit des Wirbelströmungsmessers ist es besonders vorteilhaft, die Sensorhülse 33 aus Titan herzustellen. Der Elastizitätsmodul von Titan ist wesentlich kleiner als der Elastizitätsmodul von Stahl; daher erfährt eine Sensorhülse aus Titan unter dem Einfluß der Wirbel-Druckschwankungen eine wesentlich größere Auslenkung als eine Sensorhülse gleicher Abmessungen aus Stahl. Da die Kapazitätsänderungen der Auslenkung proportional sind, ist die Empfindlichkeit des Wirbelsensors entsprechend größer. Andererseits liegt bei Titan das Verhältnis von Dichte zum Elastizitätsmodul in der gleichen Größenordnung wie bei Stahl, so daß ein Schwingkörper aus Titan ein ähnliches Schwingverhalten wie ein Schwingkörper aus Stahl zeigt. Eine Sensorhülse aus Titan kann daher hinsichtlich der Kompensation von Vibrationen und anderen Störeinflüssen sehr gut mit einem Elektrodenhalter aus Stahl kombiniert werden. Ferner können auf diese Weise die vorteilhaften Eigenschaften von Titan, insbesondere die sehr gute Korosionsbeständigkeit und die hohe Dauerfestigkeit, für die Sensorhülse nutzbar gemacht werden.

## Ansprüche

1. Wirbelströmungsmesser zur Messung der Strömungsgeschwindigkeit eines Strömungsmediums in einer Rohrleitung (11), mit einem im Strömungskanal (12) der Rohrleitung (11) angeordneten Staukörper (20), der zur Erzeugung Kármán'scher Wirbel ausgebildet ist, einem Wirbelsensor (30), der auf die von den Kármán'schen Wirbeln erzeugten Druckschwankungen anspricht, wobei der Wirbelsensor (30) einen ersten Schwingkörper (33) aufweist, der durch die Wirbel-Druckschwankungen auslenkbar ist, sowie einen kapazitiven Wandler mit einem Elektrodenhalter (40), der in einem gegenüber dem Strömungsmedium abgeschlossenen Hohlraum (21) des ersten Schwingkörpers (33) angeordnet ist und wenigstens eine Kondensatorelektrode (46, 47) trägt, die einem Elektrodenabschnitt des ersten Schwingkörpers (33) derart gegenüberliegt, daß sie mit diesem eine Meßkapazität ($C_{M1}$, $C_{M2}$) bildet, die bei einer durch die Wirbel-Druckschwankungen verursachten Auslenkung des ersten Schwingkörpers (33) veränderbar ist, wobei der Elektrodenhalter (40) als zweiter Schwingkörper ausgebildet ist, der von den Wirbel-Druckschwankungen entkoppelt ist, und mit einer Auswerteschaltung, die eine mit der bzw. mit jeder Kondensatorelektrode (46, 47) verbundene Kapazitätsmeßschaltung enthält, die in Abhängigkeit von den Änderungen der bzw. jeder Meßkapazität ($C_{M1}$, $C_{M2}$) ein für die Frequenz der Wirbel-Druckschwankungen und damit für die Strömungsgeschwindigkeit in der Rohrleitung (11) kennzeichnendes elektrisches Signal ($U_D$) erzeugt, **dadurch gekennzeichnet**, daß in dem Staukörper (20) ein Hohlraum (21) gebildet ist, der über Durchlässe (22, 23, 24, 25, 26, 27) mit dem Strömungskanal der Rohrleitung (11) in Verbindung steht, daß der erste Schwingkörper (33) eine den Elektrodenhalter (40) umgebende Sensorhülse (33) ist, die in dem Hohlraum (21) des Staukörpers (20) angeordnet ist, daß die bzw. jede Kondensatorelektrode (46, 47) durch ein abgeschirmtes Kabel (51, 52) mit der Kapazitätsmeßschaltung verbunden ist, daß die Kapazitätsmeßschaltung für jede Meßkapazität ($C_{M1}$, $C_{M2}$) eine Umschaltanordnung ($S_1$, $S_2$) enthält, welche die Meßkapazität ($C_{M1}$, $C_{M2}$) mit einer vorgegebenen Umschaltfrequenz periodisch abwechselnd zur Aufladung an eine konstante Spannung ($+U$) legt und zur Entladung mit einem Speicherkondensator ($C_{01}$, $C_{02}$) verbindet, dessen Kapazität groß gegen die Meßkapazität ist und dessen Klemmenspannung durch einen kontrollierten Entladestrom im wesentlichen auf einem konstanten Bezugspotential gehalten wird, wobei die Größe des Entladestroms der Meßkapazität proportional ist und den Meßwert darstellt, und daß eine weitere Umschaltanordnung ($S_3$) vorgesehen ist, welche die Kabelabschirmung mit der Umschaltfrequenz periodisch abwechselnd an die konstante Spannung ($+U$) und an das Bezugspotential legt.

2. Wirbelströmungsmesser nach Anspruch 1, **dadurch gekennzeichnet**, daß die Sensorhülse (33) am einen Ende so eingespannt ist, daß sie durch die Wirbel-Druckschwankungen in Biegeschwingungen versetzt wird.

3. Wirbelströmungsmesser nach Anspruch 1 oder 2, **dadurch gekennzeichnet**, daß die Sensorhülse (33) aus Titan besteht.

## Claims

1. Vortex flow meter for measuring the flow velocity of a flow medium in a tube (11) comprising a bluff body (20) arranged in the flow passage (12) of said tube (11) for generating Kármán vortices, a vortex sensor (30) which responds to the pressure fluctuations generated by the Kármán vortices, said vortex sensor (30) having a first vibratory body (33) which is displaceable by said vortex pressure fluctuations, and a capacitive transducer having an electrode carrier (40) arranged in a cavity (21) of said first vibratory body (33) which is closed with respect to said flow medium, which electrode carrier carries at least one capacitor electrode (46, 47), disposed opposite one electrode portion of said first vibratory body (33) to form therewith a measured capacitance ($C_{M1}$, $C_{M2}$) variable upon displacement of said first vibratory body (33) due to the vortex pressure fluctuations, said electrode carrier (40) being formed as a second vibratory body decoupled from said vortex pressure fluctuations, and an evaluation circuit including a capacitance measuring circuit connected to said or to each capacitor electrode (46, 47), respectively, which capacitance measuring circuit in dependence on the variations of the or each measured capacitance ($C_{M1}$, $C_{M2}$), respectively, generates an electrical signal ($U_D$) characteristic of the frequency of the vortex pressure fluctuations and thus of the flow velocity in said tube (11),

**characterized in that** a cavity (21) is formed in the bluff body (20) , said cavity communicating with the flow passage of said tube (11) via passages (22, 23, 24, 25, 26, 27), that said first vibratory body (33) is a sensor sleeve (33) surrounding said electrode carrier (40) and being disposed in said cavity (21) of said bluff body (20), that the or each capacitor electrode (46, 47) is connected to said capacitance measuring circuit by a shielded cable (51, 52), that said capacitance measuring circuit includes a switchover means ($S_1$, $S_2$) for each measuring capacitance ($C_{M1}$, $C_{M2}$) , which with a predetermined switchover frequency periodically and alternately connects said measured capacitance ($C_{M1}$, $C_{M2}$) for charging to a constant voltage (+U) and for discharging connects the same to a storage capacitor ($C_{01}$, $C_{02}$), whose capacitance is large compared with the measured capacitance and whose terminal voltage is held substantially at a constant reference potential by a controlled discharge current, the magnitude of the discharge current being proportional to said measured capacitance and representing the measured value, and that a further switchover means ($S_3$) is provided which with the switchover frequency periodically and alternately connects said shielded cable to said constant voltage (+U) and to said reference potential, respectively.

2. Vortex flow meter according to claim 1, **characterized in that** the sensor sleeve (33) is fixedly secured at one end such that it is subjected to bending vibrations by the vortex pressure fluctuations.

3. Vortex flow meter according to claim 1 or 2, **characterized in that** the sensor sleeve (33) is made of titanium.

## Revendications

1. Débitmètre à tourbillons pour mesurer la vitesse d'écoulement d'un fluide s'écoulent dans une conduite tubulaire (11) comportant un corps formant obstacle (20) disposé dans le canal d'écoulement (12) de la conduite tubulaire (11) et conçu pour produire des tourbillons de Karman, comportant aussi un détecteur de tourbillons (30) sensible aux variations de pression produites par les tourbillons de Karman, le détecteur de tourbillons (30) présentant un premier corps vibrant (33) pouvant dévier sous l'effet des variations de pression produites par les tourbillons, ainsi qu'un transducteur capacitif comprenant un porte-électrodes (40) qui est installé dans un espace creux (21), clos à l'égard du fluide en écoulement, du premier corps vibrant (33) et porte au moins une électrode de condensateur (46, 47) qui est disposée en face d'une région, formant électrode, du premier corps vibrant (33) de façon à former avec cette dernière une capacité de mesure ($C_{M1}$, $C_{M2}$) qui varie en cas de déviation du premier corps vibrant (33) sous l'effet des variations de pression produites par les tourbillons, le porte-électrodes (40) étant conçu sous une forme de second corps vibrant qui est découplé d'avec les variations de pression provoquées par les tourbillons; le débitmètre comportant en outre un circuit de traitement incluant un circuit de mesure de capacité qui est lié à l'électrode, ou chaque électrode (46, 47), de condensateur et qui, en fonction des variations de la capacitéde mesure ou de chaque capacité de mesure ($C_{M1}$, $C_{M2}$), produit un signal électrique ($U_D$) caractéristique de la fréquence des variations de pression provoquées par les tourbillons et donc caractéristique de la vitesse d'écoulement dans la conduite tubulaire (11), **caractérisé en ce que** dans le corps formant obstacle (20) est ménagé un espace creux (21) qui est en liaison avec le canal d'écoulement de la conduite tubulaire (11) par l'intermédiaire de passages (22, 23, 24, 25, 26, 27); en ce que le premier corps vibrant (33) est un manchon du détecteur (33) qui entoure le porte-électrodes (40) et qui est disposé dans l'espace creux (21) du corps formant obstacle (20); en ce que l'électrode, ou chaque électrode (46, 47), de condensateur est reliée au circuit de mesure de capacité par un câble (51, 52) blindé; en ce que le circuit de mesure de capacité contient pour chaque capacité de mesure ($C_{M1}$, $C_{M2}$) un dispositif de commutation ($S_1$; $S_2$) qui, alternativement et périodiquement à une fréquence de commutation prescrite, relie la capacité de mesure ($C_{M1}$, $C_{M2}$) à une tension constante (+U) pour la charger, puis, pour la décharger, la relie à un condensateur accumulateur ($C_{01}$, $C_{02}$) dont la capacité est grande par rapport à la capacité de mesure et dont la tension aux bornes est sensiblement maintenue à un potentiel de référence constant par l'intermédiaire d'un courant de décharge contrôlé dont la valeur est proportionnelle à la capacité de mesure et représente la valeur de mesure; et en ce qu'il est prévu un autre dispositif de commutation (S₃) qui, alternativement et périodiquement avec la fréquence de commutation ( + U) , relie le blindage du câble à la tension constante et au potentiel de référence.

2. Débitmètre à tourbillons selon la revendication 1, caractérisé en ce que le manchon du détecteur (33) est bridé à l'une de ses extrémités de façon à vibrer en flexion sous l'action des variations de pression provoquées par les tourbillons.

3. Débitmètre à tourbillons selon la revendication 1 ou 2, caractérisé en ce que le manchon du détecteur (33) est en titane.

# FIG.1

FIG.2

FIG.3

# FIG.4

# FIG.5